(19) Europäisches Patentamt
European Patent Office
Office européen des brevets

(11) EP 0 881 467 A1

(12) **EUROPEAN PATENT APPLICATION**
published in accordance with Art. 158(3) EPC

(43) Date of publication:
**02.12.1998 Bulletin 1998/49**

(21) Application number: **97902662.2**

(22) Date of filing: **13.02.1997**

(51) Int. Cl.$^6$: **G01D 1/18**, G01M 19/00, G08B 23/00

(86) International application number:
**PCT/JP97/00367**

(87) International publication number:
**WO 97/30329 (21.08.1997 Gazette 1997/36)**

(84) Designated Contracting States:
**CH DE DK FR GB IT LI NL**

(30) Priority: **16.02.1996 JP 29733/96**

(71) Applicant:
**SUMITOMO METAL INDUSTRIES, LTD.**
**Osaka-Shi, Osaka 541 (JP)**

(72) Inventor:
**MIYANO, Takaya,**
**Sumitomo Metal Industries Limited**
**Osaka-shi, Osaka 541 (JP)**

(74) Representative:
**Dallmeyer, Georg, Dipl.-Ing. et al**
**Patentanwälte**
**Von Kreisler-Selting-Werner**
**Bahnhofsvorplatz 1 (Deichmannhaus)**
**50667 Köln (DE)**

# (54) METHOD OF DETECTING ABNORMALITY AND ABNORMALITY DETECTION SYSTEM

(57) A physical quantity which is emitted from a sample to be detected and which changes with the passage of time, is measured at a predetermined time interval, and abnormality of the sample is detected based on the obtained series data. A plurality of first vectors of a suitable dimension are formed from the time series data, the first vectors are advanced in parallel for a suitable period of time to form second vectors, a, deviation is calculated between the second vectors and the first vectors that are formed, the calculated deviation is compared with a preset threshold value, and whether the sample is abnormal or not is determined based upon the result of comparison.

FIG. 1

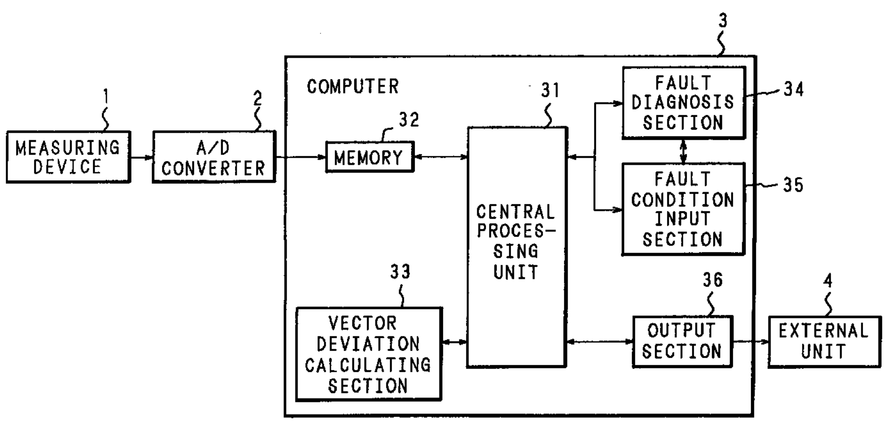


EP 0 881 467 A1

## Description

### Field of the Invention

The present invention relates to a detecting method for detecting abnormality of a producing device, producing plant, a product, etc. and relates to a system which is used for the method.

### Description of Related Art

A sound or vibration generated by a mechanical device, density of reactive production in a chemical plant, an electric current or voltage applied to an electronic device are measured at intervals, and abnormality of the mechanical device, abnormality of reactive control or abnormality of quality of products is detected.

As an example of such an abnormality detecting method, there suggests a method of detecting abnormality by the spectrum analysis of a time series signal measured with a predetermined period in Chapters 12 through 14 of "Numerical recipe in C" translated by Tankei, Okumura, Satoh and Kobayashi (Gijyutsuhyoronnsha 1993).

In this method, a time series signal measured with a predetermined period is fast-Fourier transformed in a suitable frequency interval in a suitable frequency region, and coefficients $a_k$ and $b_k$ satisfying the following equation (1) are obtained so that $a_k^2 + b_k^2$ is calculated. At this time, in the start frequency and end frequency of the Fourier transformation, in order to prevent an abrupt rise and fall of f(x) shown in the equation (1), a suitable data window, such as Hanning window, is set, and the Hanning window is multiplied by f(x) so that a calculation error of $a_k^2 + b_k^2$ is lowered.

$$f(t) = \sum_k (a_k \sin \omega_k t + b_k \cos\omega_k t) \qquad (1)$$

The calculated $a_k^2 + b_k^2$ is plotted and a power spectrum is created in a coordinate area where a horizontal axis is $\log\omega$ and a vertical axis is log (spectral density). And a periodic fluctuation component is subtracted therefrom so that a suitable straight line is obtained by the method of least squares. Then, according to a result of comparing the level or slope (power spectral index) of the obtained straight line with a predetermined threshold, existence of abnormality is judged.

However, in the aforementioned method of detecting abnormality by the spectrum analysis, it is difficult to accurately obtain the straight line which is suitable to the power spectrum, and misjudgment occurs due to a measurement noise contained in the time series signal. Moreover, it is difficult to set a suitable data window, and error of the power spectrum is large.

A main object of the present invention is to provide an abnormality detecting method which is capable of detecting various abnormality accurately by using time series data and their prediction model and to provide a system used for the method.

### Summary of the Invention

The inventors built a prediction model based on a plurality of past time series signal, gave an obtained time series signal to the prediction model, predicted a tendency of the time series signal, and compared the predicted result with actual time series data so as to come to an idea that any abnormality can be detected.

Therefore, the inventors tried to build a lot of prediction models such as (1) linear autoregression (for example, G.E.P. Box and G.M. Jenkins, Time Series Analysis: Forecasting and control, Holden-Day Inc., 1976), (2) neural network (for example, A.S. Lapedes and R. Farber, Los Alamos National Laboratory Report No. LA-UR 87-2662 (1987), No. LA-UR 88-418 (1988)), (3) radius basic function network (for example, M. Casdagli, Physica D, Vol. 35, pp.335-356(1989)), and (4) simplex projection method (for example, G. Sugihara and R.M. May, Nature, vol.344, pp.734-741 (1990)), but all of them were incomplete.

After repeated trial and error, attention was given to the time series analysis algorithm proposed by Wayland et al. (R. Wayland, D. Bromley, D. Pickett and A. Passamante, Physical Review Letters, Vol. 70, pp.580-582 (1993)).

As for the abnormality detecting method of the present invention, which measures a physical quantity of an object to be detected which changes according to time at predetermined time intervals and detects abnormality of the object to be detected based on the obtained time series data, the method creates a plurality of first vectors of a suitable dimension from the time series data, creates second vectors which are obtained by translating the first vectors by a suitable time interval, calculates deviations of the created first and second vectors, compares the calculated values with a predetermined threshold value, and judges as to whether or not the object to be detected is abnormal from the compared results.

In such a method, the deviation calculating method includes the step of selecting a suitable vector from the first vectors, the step of extracting a predetermined number of vectors from the first vectors in the order where the predetermined number of vectors are close to the selected vector, the step of creating translation vectors which are obtained by translating the extracted vectors and the selected vector by a suitable time interval, the step of obtaining differential vectors between the created translation vectors and the selected vector and the extracted vectors, and the step of calculating variance of the obtained differential vectors.

An outline of the abnormality detecting method of the present invention will be described below. First, a physical quantity of an object to be detected such as a sound of motor rotation, a current or voltage applied to an electronic device is measured at a suitable period, and time series data $\{x(t)\}_{t-1}^{N}$ (N: the number of data points) are obtained. A suitable embedding dimension D and sampling time interval $\Delta t$ are set, and the vector X(t) represented by the following equation (2) is created from the time series data. Evidence has been given that creating of vectors X(t) respectively for different embedding dimensions D means that the time series data are obtained respectively for plural kinds of physical quantities. As a result, abnormality can be detected accurately. The vector X(t) is translated by the suitable time interval $T\Delta t$ so that the vector Y(t) represented by the following equation (3) is created.

$$X(t) = \{x(t), x(t-\Delta t), \cdots, x(t-(D-1)\Delta t)\} \tag{2}$$

$$Y(t) = \{x(t+T\Delta t), x(t+T\Delta t-\Delta t), \cdots, x(t+T\Delta t-(D-1)\Delta t)\} \tag{3}$$

A suitable vector X(t(0)) is selected from N vectors X(t), distances $h_x$ between the selected vector X(t(0)) and all the (N-1) vectors X(t) other than the vector X(t(0)) are calculated according to the following equation (4), and K nearest vectors (K<N) are extracted in the sense of Euclidean distance:

$$h_x = \sqrt{\sum_{d=0}^{D-1} [x(t(0)-d\Delta t) - x(t(k)-d\Delta t)]^2} \tag{4}$$

Vectors Y(t(k)) corresponding to the (K+1) vectors X(t(k)) (k = 0, 1, $\cdots$, K) obtained in such a manner are calculated, and differential vectors V(t(k)) are calculated according to the following equation (5). Then, when the translation error E(trans) which is the variance of the obtained (K+1) vectors V(t(k)) is obtained according to the following equation (6), degree of disorder of the time series data is quantatively determined as E(trans).

$$V(t(k)) = X(t(k)) - Y(t(k)) \tag{5}$$

$$E(\text{trans}) = \frac{1}{K+1} \sum_{k=0}^{K} \frac{|V(t(k)) - \langle V \rangle|^2}{|\langle V \rangle|^2} \tag{6}$$

Here,

$$\langle V \rangle = \frac{1}{K+1} \sum_{K=0}^{K} V(t(k))$$

As a result of wholeheartedly studying by the inventors, it was found that abnormality can be easily recognized. This is because in the case where abnormality such that a ratio of noises contained in the time series data is increased occurs, a value of E(trans) becomes large, and in the case where abnormality such that a power spectral index of noises contained in the time series data is increased occurs, a value of E(trans) becomes small, and thus E(trans) changes more sharply than the power spectral index. Therefore, the method and the system, which sets a threshold value for judging the occurrence of the former abnormality and a threshold value for judging the occurrence of the latter abnormality and detects abnormality if E(trans) exceeds the area between both the threshold values, was invented.

## Brief Description of the Drawings

FIG. 1 is a block diagram showing a constitution of an abnormality detecting system of the present invention; FIG.

2 is a flow chart showing an abnormality detecting procedure through a computer shown in FIG. 1; FIG. 3 is a flow chart showing the abnormality detecting procedure through the computer shown in FIG. 1; FIG. 4 is a flow chart showing the abnormality detecting procedure through the computer shown in FIG. 1; FIG. 5 is a flow chart showing the abnormality detecting procedure through the computer shown in FIG. 1; FIGS. 6(A) and 6(B) are graphs showing time series data used for comparison test; FIG. 7 is a graph showing a result of calculating E (trans) from two time series data shown in FIGS. 6(A) and 6(B) by the method of the present invention; FIG. 8 is a graph showing a result of creating a power spectrum from the two time series data shown in FIGS. 6(A) and 6(B) by the conventional method; FIGS. 9(A) and (B) are graphs showing time series data used for comparison test; FIG. 10 is a graph showing a result of calculating E (trans) from two time series data shown in FIGS. 9(A) and 9(B) by the method of the present invention; and FIG. 11 is a graph showing a result of creating a power spectrum from the two time series data shown in FIGS. 9(A) and 9(B) by the conventional method.

Description of the Preferred Embodiments

The following describes an embodiment of the present invention concretely on reference to the drawings.

FIG. 1 is a block diagram showing a constitution of an abnormality detecting system of the present invention. In FIG. 1, 1 is a measuring device such as a sound wave sensor, ultrasonic sensor, vibration sensor, optical sensor, voltmeter or current meter. A type of the measuring device 1 is selected according to a physical quantity to be measured, and the measuring device 1 measures a physical quantity of an object to be detected which is a target for abnormality detection with a predetermined period. An output of the measuring device 1 is given to an analog/digital (A/D) converter 2, and the output is converted into a digital signal therein, and the digital signal is given to a memory 32 provided to a computer 3 so as to be stored thereinto as time series data.

The time series data stored into the memory 32 within a predetermined time are given to a vector deviation calculating section 33 through a central processing unit 31, and the vector deviation calculating section 33 calculates E (trans) in a manner mentioned later, and gives E (trans) to a fault diagnosis section 34 which judges as to whether or not E (trans) is abnormal. A first and second threshold values are set in a fault condition input section 35, and the fault diagnosis section 34 compares E (trans) given from the vector deviation calculating section 33 with the first and second threshold values set in the fault condition input section 35 respectively. If E (trans) is not less than the first threshold value or not more than the second threshold value, the fault diagnosis section 34 judges that E(trans) is abnormal, and makes an output section 36 output an alarm to an external unit 4 such as a system controller or alarm device.

FIGS. 2 through 5 are flow charts showing an abnormality detecting procedure through the computer 3 shown in FIG. 1. An embedding dimension D, sampling interval $\Delta t$, T of a translation time $T\Delta t$, vector selecting number M and repeating number K and Q are set in the vector deviation calculating section 33 of the computer 3, and the first and second threshold values are set in the fault condition input section 35 (Step S1). The memory 32 of the computer 3 stores the digital signal given from the A/D converter 2 therein as the time series data (Step S2), the time series data stored into the memory 32 within a predetermined time are given to the vector deviation calculating section 33 through the central processing unit 31.

The vector deviation calculating section 33 creates a vector X(t) represented by the following equation (2) from the given time series data $\{x(t)\}_{t-1}^{N}$ (N: the number of data points) (Step S3).

$$X(t) = \{x(t), x(t-\Delta t), \cdots, x(t-(D-1)\Delta t)\} \qquad (2)$$

Further, the vector deviation calculating section 33 translates the vector X(t) by a suitable time interval $T\Delta t$ and creates a vector Y(t) represented by the following equation (3) (Step S4).

$$Y(t) = \{x(t+T\Delta t), x(t+T\Delta t-\Delta t), \cdots, x(t+T\Delta t-(D-1)\Delta t)\} \qquad (3)$$

The vector deviation calculating section 33 generates arbitrary random numbers (Step S5), and selects M ($M<N$) vectors X (t (0)) from the N vectors X (t) created at S3 by using the generated random numbers (Step S6), and suitably specifies one vector X(t(0)) (Step S7). The vector deviation calculating section 33 calculates distances $h_x$ between the specified vector X(t (0)) and the remaining (N-1) vectors X(t) other than the vector X(t(0)) according to the following equation (4) (Step S8), and rearranges the calculated distances in an increasing order, and extracts K ($K<M$) nearest vectors from the head, and obtains vectors X(t(k)) ($k = 1, \cdots, K$) (Step S9).

$$h_x = \sqrt{\sum_{d=0}^{D-1} [x(t(0)-d\Delta t) - x(t(k)-d\Delta t)]^2} \qquad (4)$$

The vector deviation calculating section 33 creates a vector Y(t(k)) obtained by translating the vector X(t(k)) (k = 0, 1, • • •, K) obtained at S7 and S9 by the time interval TΔt (Step S10).

The vector deviation calculating section 33 calculates (K+1) differential vectors V(t(k)) according to the following equation (5) (Step S11), and obtains a primary translation error $E(trans)_1$ from each differential vector V(t(k)) and the following equation (7) (Step S12).

$$V(t(k))= X(t(k)) - Y(t(k)) \tag{5}$$

$$E\,(trans)_1 = \frac{1}{K+1}\sum_{k=0}^{K}\frac{|V\,(t(k)) - \langle V\rangle|^2}{|\langle V\rangle|^2} \tag{7}$$

Here,

$$\text{Here } \langle V\rangle = \frac{1}{K+1}\sum_{k=0}^{K} V\,(t(k))$$

The vector deviation calculating section 33 repeats the steps S7 through S12 until it judges that M primary translation errors $E(trans)_1$ are obtained at S13, and obtains a primary translation error $E(trans)_1$ as to the M vectors X(t(0)) selected at S6. When the vector deviation calculating section 33 judges that the M primary translation errors $E(trans)_1$ are obtained, it calculates their median so as to obtain a primary average translation error $E(trans)_{11}$ (Step S14).

Then, the vector deviation calculating section 33 repeats the steps S5 through S14 until it judges that Q primary average translation errors $E(trans)_{11}$ are obtained at S15, and when judges that the Q primary average translation errors $E(trans)_{11}$ are obtained, it calculates their average value so as to obtain E(trans) (Step S16). As a result, E(trans) of the time series data can be obtained accurately.

When obtaining E(trans), the vector deviation calculating section 33 gives it to the fault diagnosis section 34. The fault diagnosis section 34 compares the E(trans) given from the vector deviation calculating section 33 with the first threshold value and/or the second threshold value set in the fault condition input section 35 (Step S17). When the E(trans) is not less than the first threshold value or not more than the second threshold value, the fault diagnosis section 34 judges the E(trans) as abnormal (Step S18), and an alarm is outputted from the output section 36 to the external unit 4 (Step S19).

Next, the following describes a result of comparing abnormality detection by the method of the present invention with abnormality detection by the conventional method.

FIGS. 6 and 9 are graphs showing time series data used for the comparison test. A vertical axis represents a signal strength and a horizontal axis represents a time from starting of the measurement. FIG. 6 is a graph showing time series data simulating vibration of the motor rotating section of a fan: FIG. 6(A) shows time series data when no abnormality occurs; and FIG. 6(B) shows time series data when abnormality occurs. The signal strength represented by the vertical axis is obtained by converting vibration into an electric signal by a vibration sensor, but a reflected wave of the vibrating section may be detected by an optical sensor. Moreover, the same vibration component can be obtained from a voltage value obtained by measuring a voltage characteristic of the motor by a voltmeter or from a current value obtained by measuring a current characteristic of the motor by a current meter.

In addition, FIG. 9 is a graph showing time series data simulating a sound signal: FIG. 9(A) shows time series data when no abnormality occurs; and FIG. 9(B) shows time series data when abnormality occurs. The signal strength represented by a vertical axis is obtained by converting a sound into an electric signal by a sound wave sensor.

FIG. 7 is a graph showing a result of calculating E(trans) from two time series data shown in FIGS. 6(A) and 6(B) by the method of the present invention. ● shows non-abnormality, and ○ shows abnormality. Here, the sampling interval Δt is set to 1, T of the translation time TΔt to 5, the vector selecting number M to 300, the vector selecting number K to 4, the repeating number Q to 20, and the embedding dimension D to 5, 6, 7, 8, 9 and 10. Moreover, FIG. 8 is a graph showing a result of creating a power spectrum from the two time series data shown in FIGS. 6(A) and 6(B) by the conventional method. A solid line shows non-abnormality, and a broken line shows abnormality.

As is clear from FIG. 7, in the method of the present invention, E (trans) in the case of abnormality is clearly separated from that in the case of non-abnormality, and a judgment can be accurately made as to whether abnormal or not by setting 0.05 as a threshold value. Meanwhile, as is clear from FIG. 8, in the conventional method, many parts of the power spectrum in the case of abnormality overlap with those in the case of non-abnormality, and thus an error in judgment occurs.

In addition, FIG. 10 is a graph showing a result of calculating E(trans) from two time series data shown in FIGS. 9(A) and 9(B) by the present invention, ● shows non-abnormality and ○ shows abnormality. Here, the sampling interval $\Delta t$ is set to 1, T of the translation time $T\Delta t$ to 5, the vector selecting number M to 300, the vector selecting number K to 4, the repeating number Q to 20, and the embedding dimension D to 11, 12, 13, 14 and 15. Moreover, FIG. 11 is a graph showing a result of creating a power spectrum from the two time series data shown in FIGS. 9(A) and 9(B) by the conventional method, and a solid line shows non-abnormality and a broken line shows abnormality.

As is clear from FIG. 10, in the method of the present invention, E (trans) in the case of abnormality is clearly separated from that in the case of non-abnormality, and a judgment can be accurately made as to whether abnormal or not by setting 0.90 as a threshold value. Meanwhile, as is clear from FIG. 11, in the conventional method, many parts of the power spectrum in the case of abnormality overlap with those in the case of non-abnormality, and thus an error in judgment occurs.

Industrial Applicability

As detailed above, in the present invention, even in the case where a physical quantity to be measured changes according to non-linear dynamics, various abnormality can be detected accurately. For this reason, there produces excellent effects such that an operation of a producing plant can be exactly managed, parts of a producing unit can be exactly changed and quality of products can be exactly managed.

## Claims

1. An abnormality detecting method of measuring a physical quantity of an object to be detected which changes according to time at predetermined time intervals and detecting abnormality of the object to be detected based on obtained time series data, said method comprising the steps of:

   creating a plurality of first vectors of a suitable dimension from the time series data;
   creating second vectors which are obtained by translating the first vectors by a suitable time interval;
   calculating deviations of the created first and second vectors;
   comparing the calculated values with a predetermined threshold value; and
   judging as to whether or not the object to be detected is abnormal from the compared results.

2. The abnormality detecting method according to claim 1, wherein said step of calculating the deviations comprises:

   a first step of selecting a suitable vector from the first vectors;
   a second step of extracting a predetermined number of vectors from the first vectors in the order where the predetermined number of vectors are close to the selected vector;
   a third step of creating translation vectors which are obtained by translating the extracted vectors and the selected vector by a suitable time interval;
   a fourth step of obtaining differential vectors between the created translation vectors and the selected vector and the extracted vectors; and
   a fifth step of calculating the variance of the obtained differential vectors.

3. The abnormality detecting method according to claim 2, further comprising the step of obtaining a plurality of intermediate values on average values by plural repetitions of calculating a plurality of variances by repeating the first through fifth steps while changing the selected vector and of obtaining an intermediate value or average value of the calculated plural variances, and setting an average value of the obtained plural intermediate values or average values to a calculated value which is compared with the threshold value.

4. The abnormality detecting method according to claim 2, further comprising the step of calculating a plurality of variances by repeating the first through fifth steps while changing the selected vector, obtaining the median or average value of the calculated plural variances, and setting the obtained median or average value to a calculated value which is compared with the threshold value.

5. An abnormality detecting system of measuring a physical quantity of an object to be detected which changes according to time at predetermined time intervals and detecting abnormality of the object to be detected based on obtained time series data, said system comprising:

   means for creating a plurality of first vectors of a suitable dimension from the time series data;

means for creating second vectors which are obtained by translating the first vectors by a suitable time interval;
calculating means for calculating deviations of the created first and second vectors;
means for comparing the calculated values with a predetermined threshold value; and
means for judging as to whether or not the object to be detected is abnormal from the compared results.

**6.** The abnormality detecting system according to claim 5, wherein said calculating means includes:

means for selecting a suitable vector from the first vectors;
means for extracting a predetermined number of vectors from the first vectors in the order where the predetermined number of vectors are close to the selected vector;
means for creating translation vectors which are obtained by translating the extracted vectors and the selected vector by a suitable time interval;
means for obtaining differential vectors between the created translation vectors and the selected vector and the extracted vectors; and
means for calculating the variance of the obtained differential vectors.

**7.** An abnormality detecting system for detecting abnormality of an object to be detected, said system comprising:

measuring means for measuring a physical quantity of the object to be detected which changes according to time at predetermined time intervals;
means for storing time series data of the measured value obtained by said measuring means;
means for creating a plurality of first vectors of a suitable dimension from the stored time series data;
means for creating second vectors which are obtained by translating the first vectors by a suitable time interval;
means for calculating deviations of the created first and second vectors;
means for comparing the calculated values with a predetermined threshold value; and
means for detecting that the object to be detected is abnormal according to the compared results.

**8.** The abnormality detecting system according to claim 7, wherein said measuring means is a device which is selected from a group consisting of a sound wave sensor, ultrasonic sensor, vibration sensor, optical sensor, voltmeter and current meter.

FIG. 1

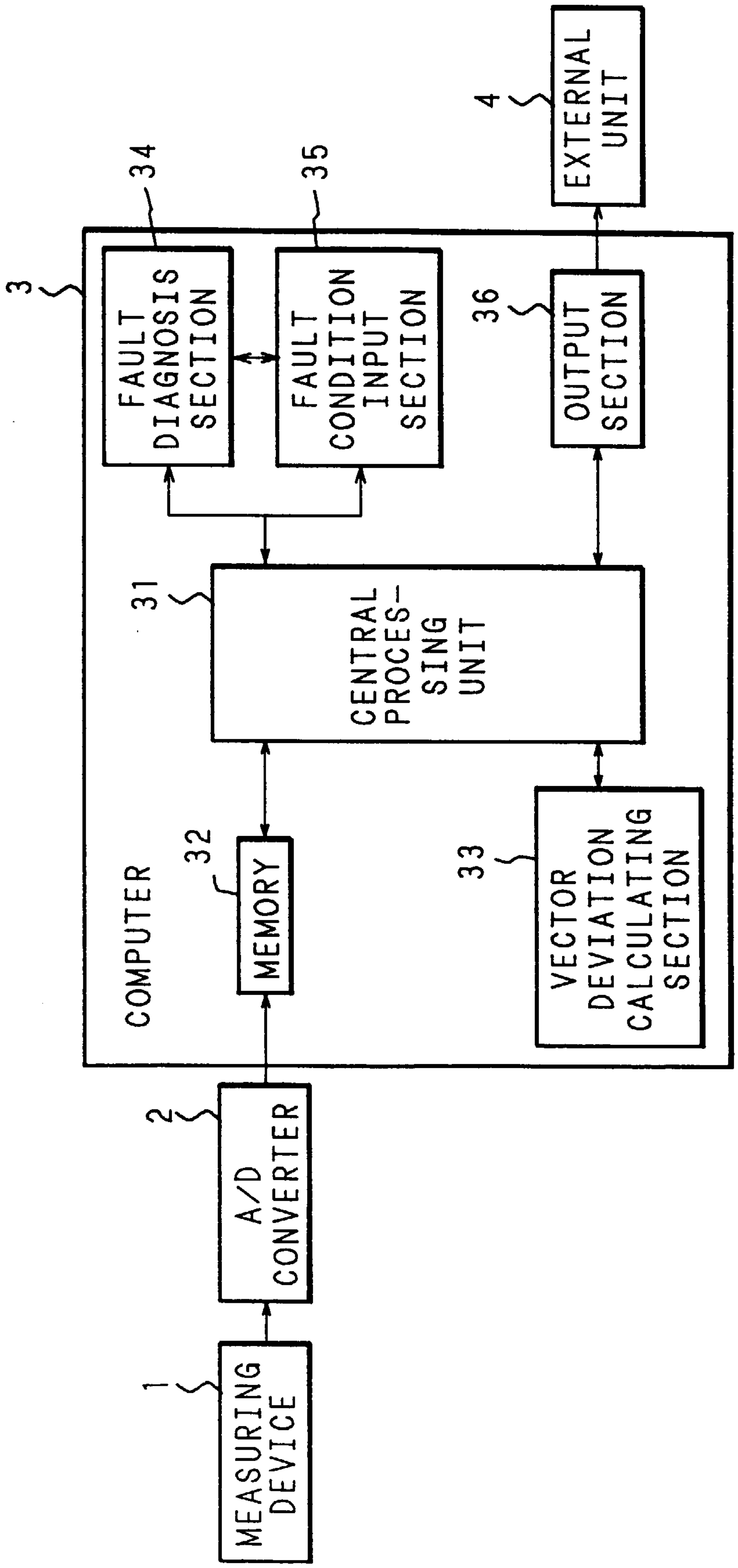
MEASURING DEVICE
1
A/D CONVERTER
2
COMPUTER
3
CENTRAL PROCES-SING UNIT
31
MEMORY
32
VECTOR DEVIATION CALCULATING SECTION
33
FAULT DIAGNOSIS SECTION
34
FAULT CONDITION INPUT SECTION
35
OUTPUT SECTION
36
EXTERNAL UNIT
4

FIG. 2

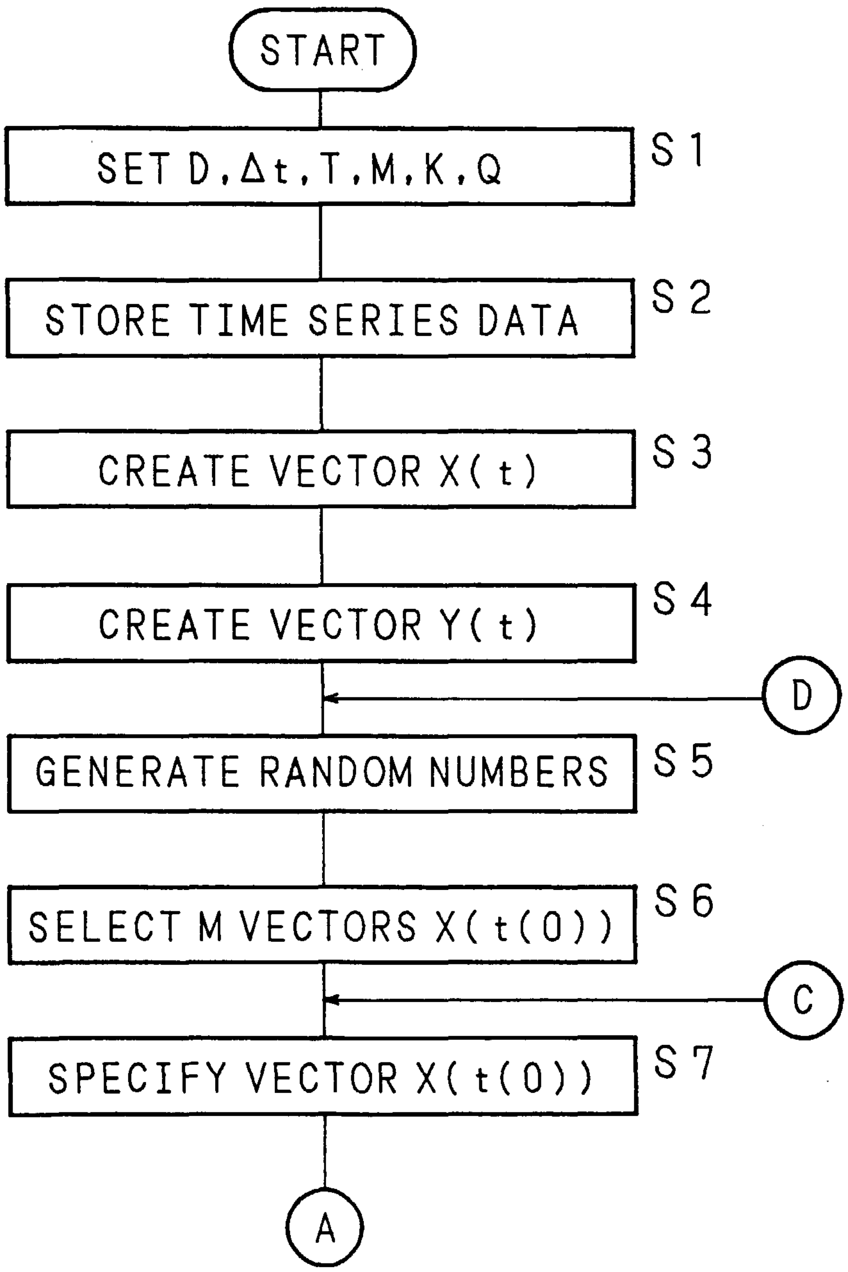
START
SET D, Δt, T, M, K, Q
S1
STORE TIME SERIES DATA
S2
CREATE VECTOR X(t)
S3
CREATE VECTOR Y(t)
S4
D
GENERATE RANDOM NUMBERS
S5
SELECT M VECTORS X(t(0))
S6
C
SPECIFY VECTOR X(t(0))
S7
A

FIG. 3

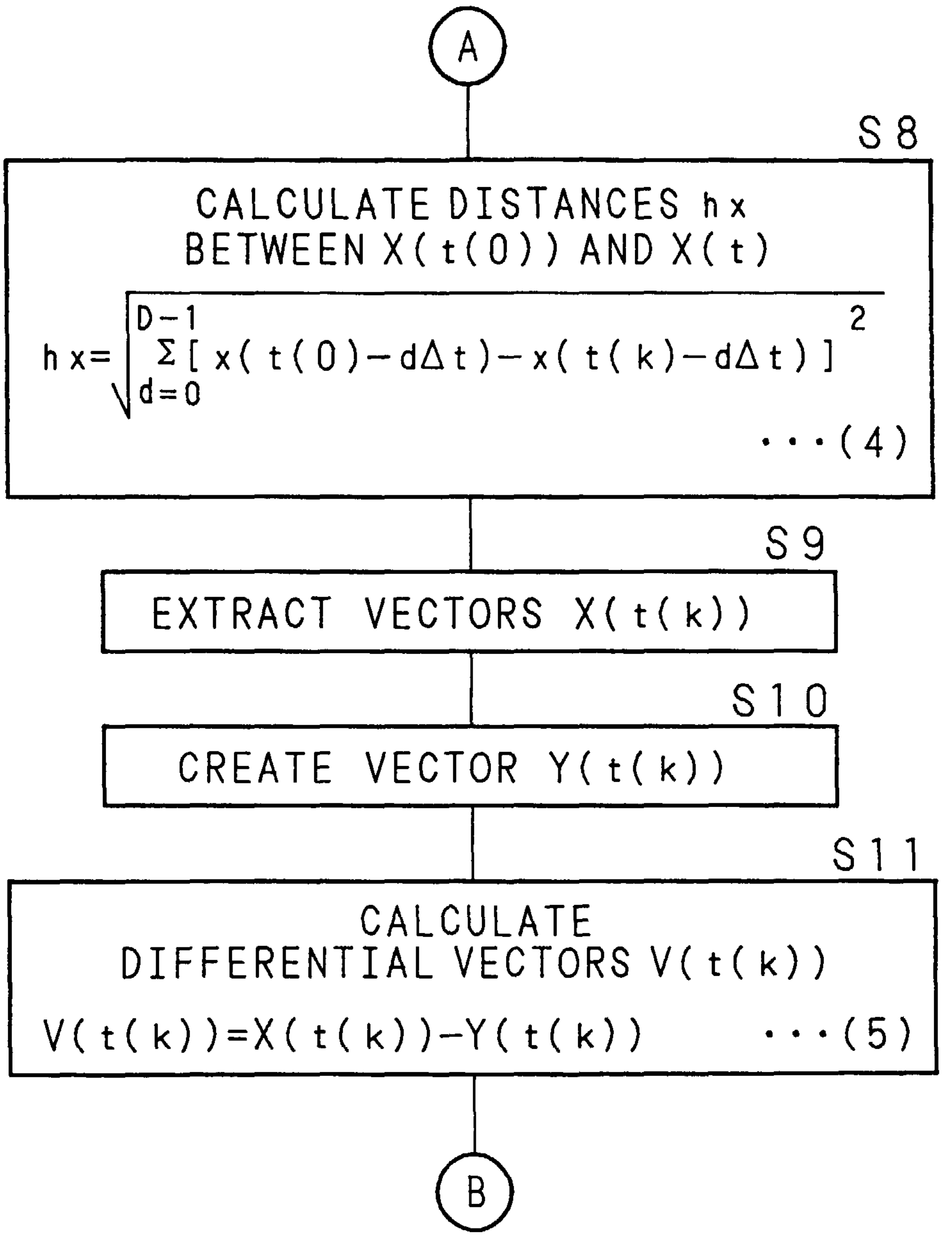
A
S8
CALCULATE DISTANCES hx
BETWEEN X(t(0)) AND X(t)
$$hx=\sqrt{\sum_{d=0}^{D-1}[x(t(0)-d\Delta t)-x(t(k)-d\Delta t)]^2}$$
···(4)
S9
EXTRACT VECTORS X(t(k))
S10
CREATE VECTOR Y(t(k))
S11
CALCULATE
DIFFERENTIAL VECTORS V(t(k))
$V(t(k))=X(t(k))-Y(t(k))$ ···(5)
B

FIG. 4

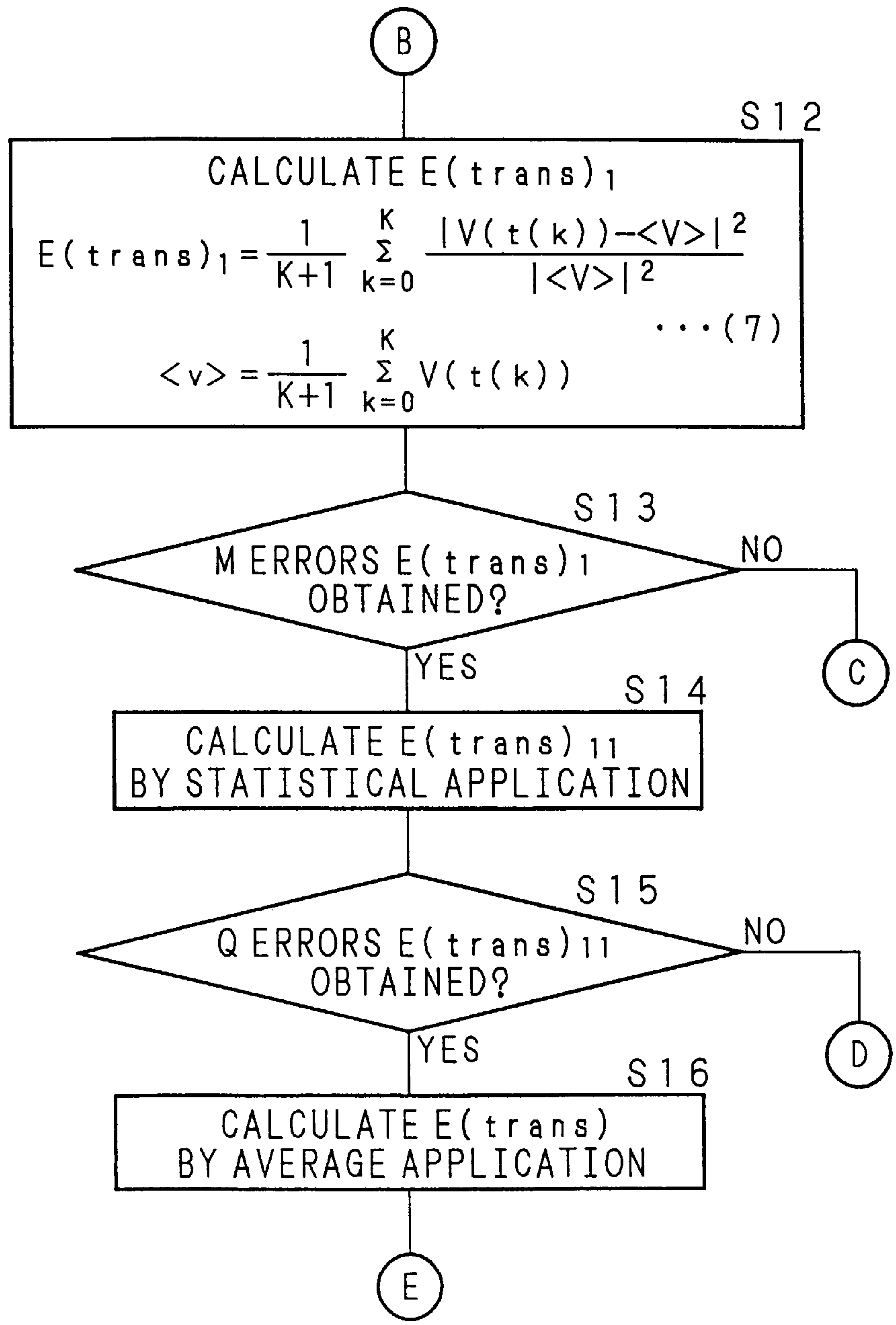
B
S12
CALCULATE $E(trans)_1$
$E(trans)_1 = \frac{1}{K+1} \sum_{k=0}^{K} \frac{|V(t(k)) - \langle V \rangle|^2}{|\langle V \rangle|^2}$ ···(7)
$\langle v \rangle = \frac{1}{K+1} \sum_{k=0}^{K} V(t(k))$
S13
M ERRORS $E(trans)_1$ OBTAINED?
NO
C
YES
S14
CALCULATE $E(trans)_{11}$ BY STATISTICAL APPLICATION
S15
Q ERRORS $E(trans)_{11}$ OBTAINED?
NO
D
YES
S16
CALCULATE E(trans) BY AVERAGE APPLICATION
E

FIG. 5

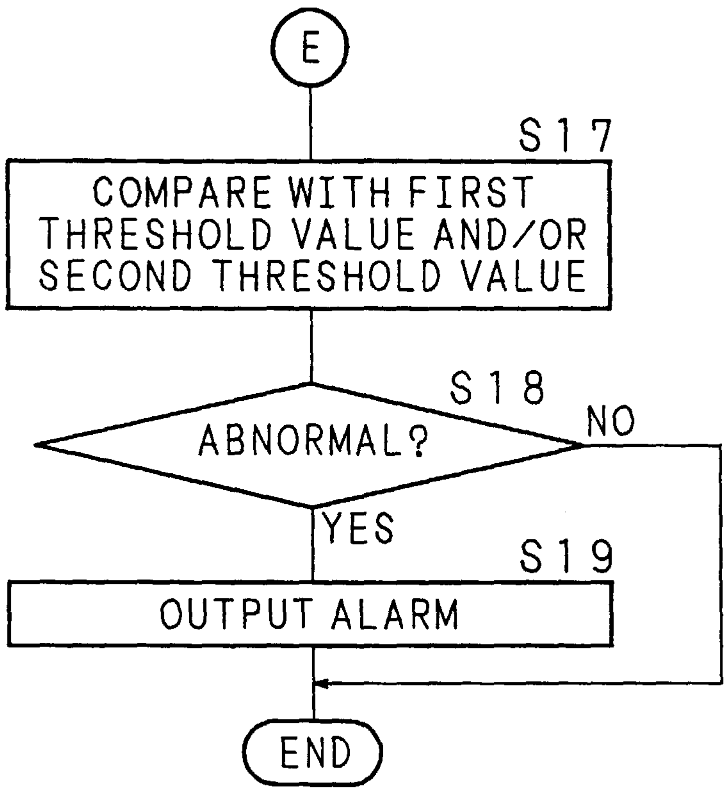
E
S17
COMPARE WITH FIRST THRESHOLD VALUE AND/OR SECOND THRESHOLD VALUE
S18
ABNORMAL?
NO
YES
S19
OUTPUT ALARM
END

FIG. 6A

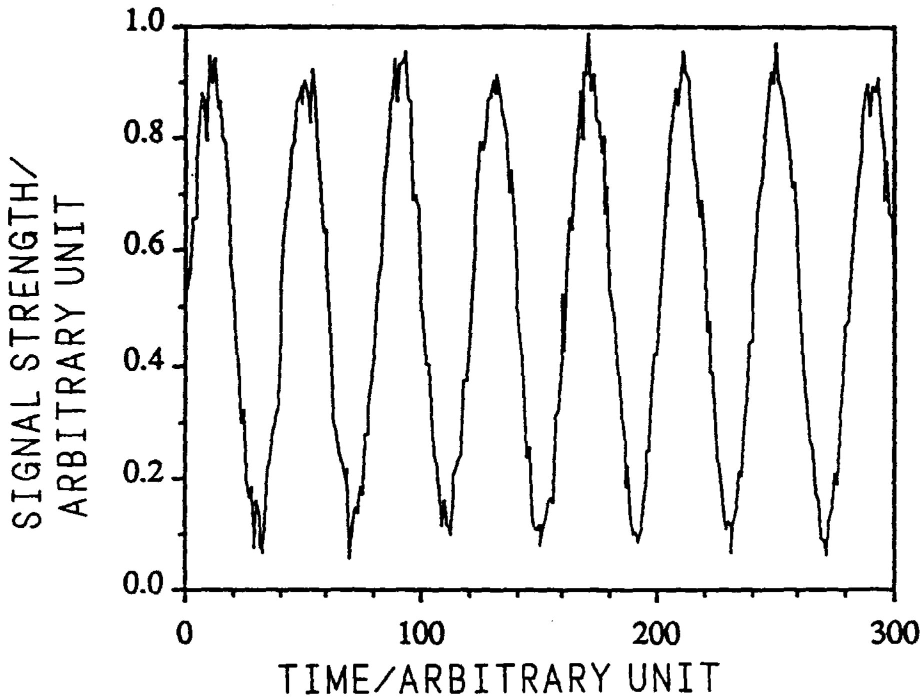
SIGNAL STRENGTH/
ARBITRARY UNIT
1.0
0.8
0.6
0.4
0.2
0.0
0
100
200
300
TIME/ARBITRARY UNIT

FIG. 6B

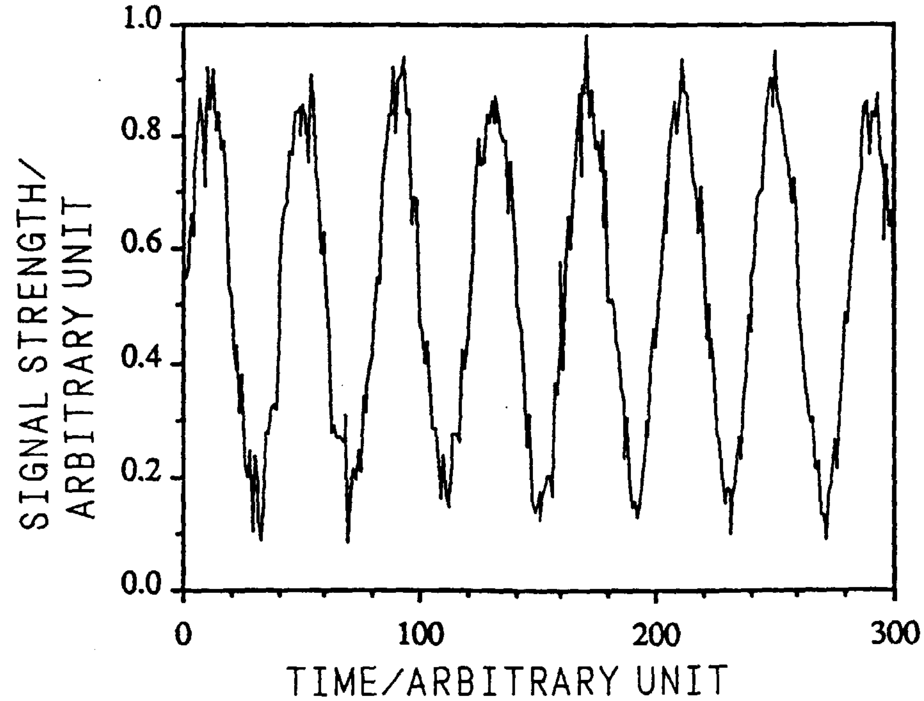
SIGNAL STRENGTH/
ARBITRARY UNIT
1.0
0.8
0.6
0.4
0.2
0.0
0
100
200
300
TIME/ARBITRARY UNIT

FIG. 7

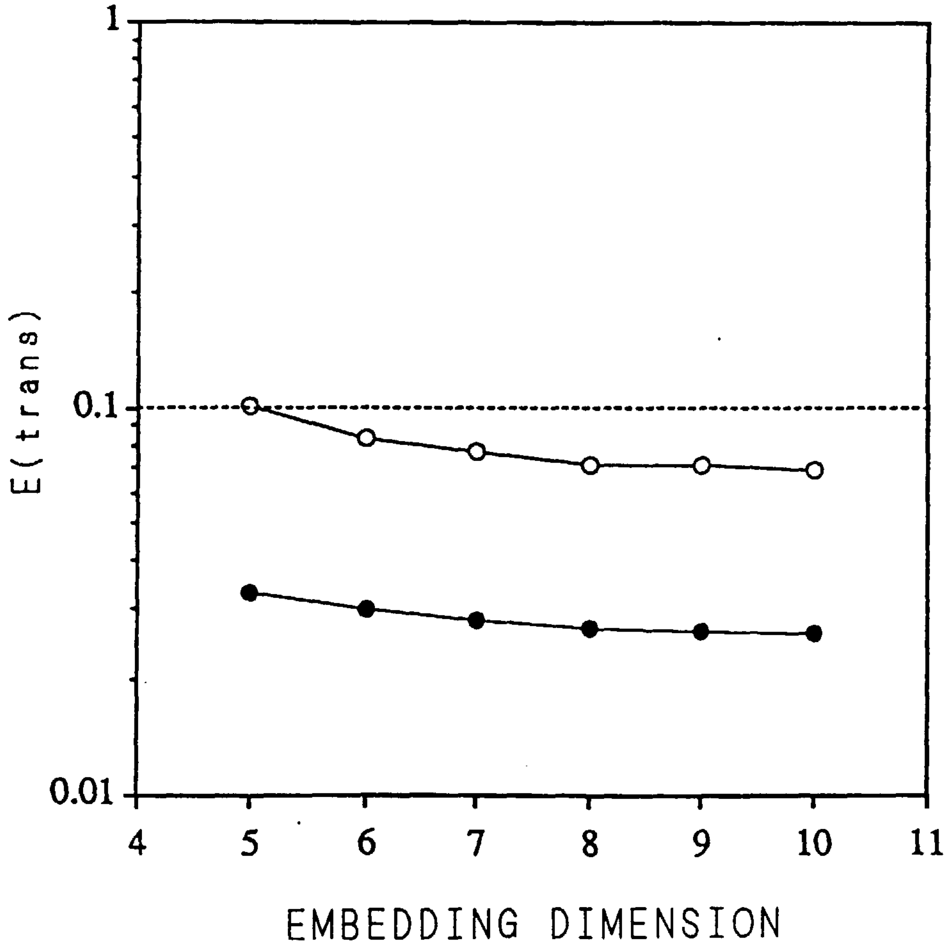

FIG. 8

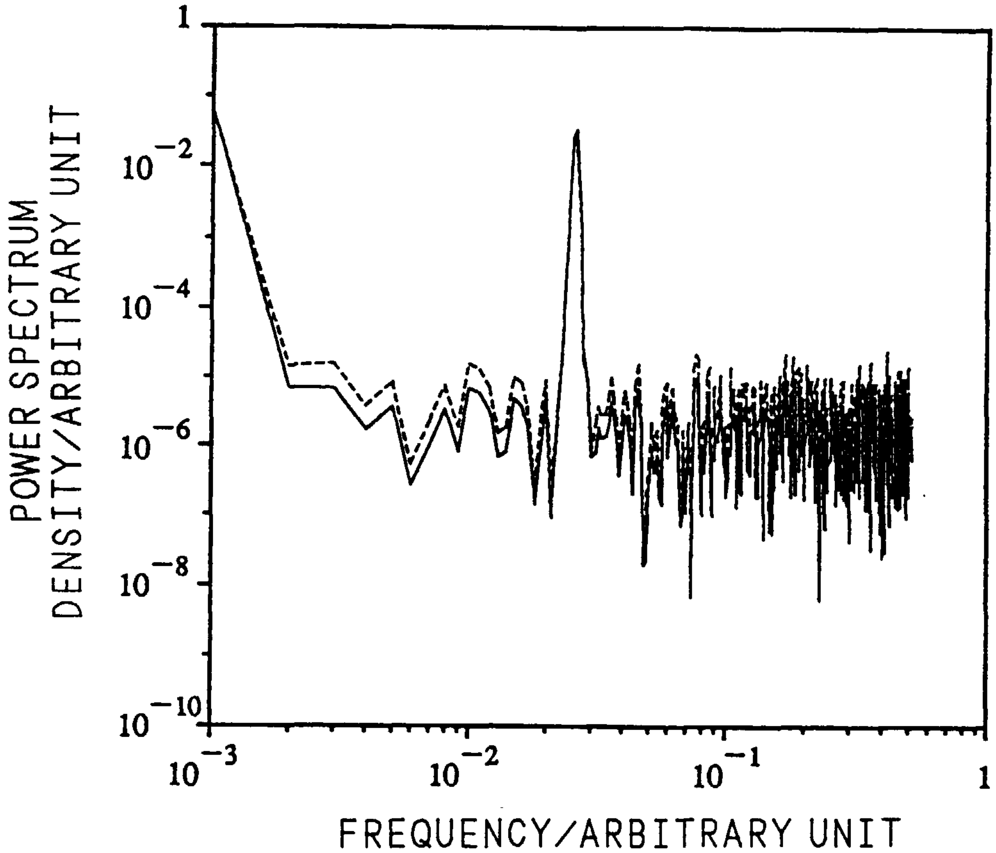
POWER SPECTRUM
DENSITY/ARBITRARY UNIT
1
$10^{-2}$
$10^{-4}$
$10^{-6}$
$10^{-8}$
$10^{-10}$
$10^{-3}$
$10^{-2}$
$10^{-1}$
1
FREQUENCY/ARBITRARY UNIT

FIG. 9A

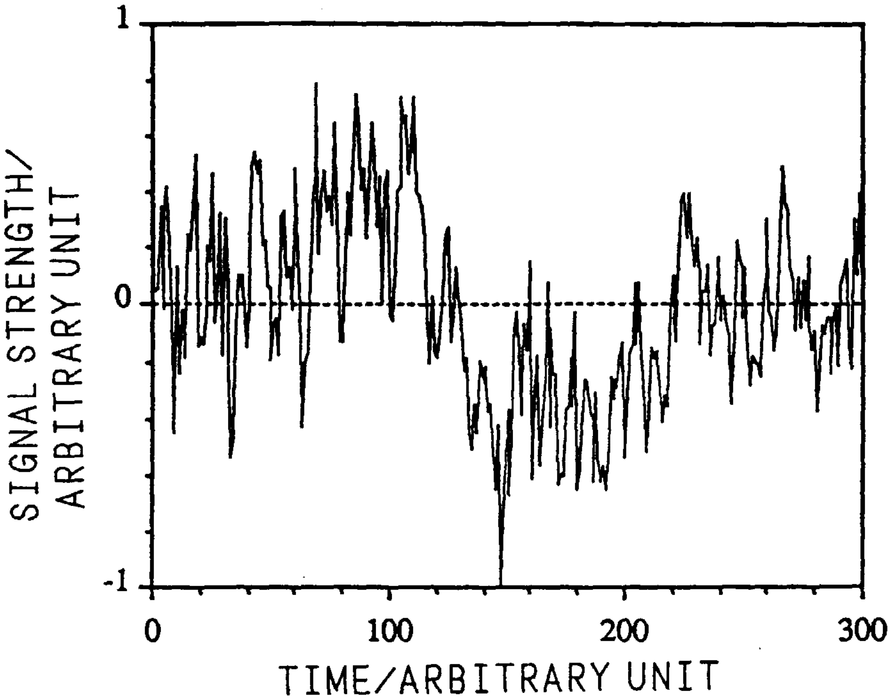
1
0
-1
SIGNAL STRENGTH/
ARBITRARY UNIT
0
100
200
300
TIME/ARBITRARY UNIT

FIG. 9B

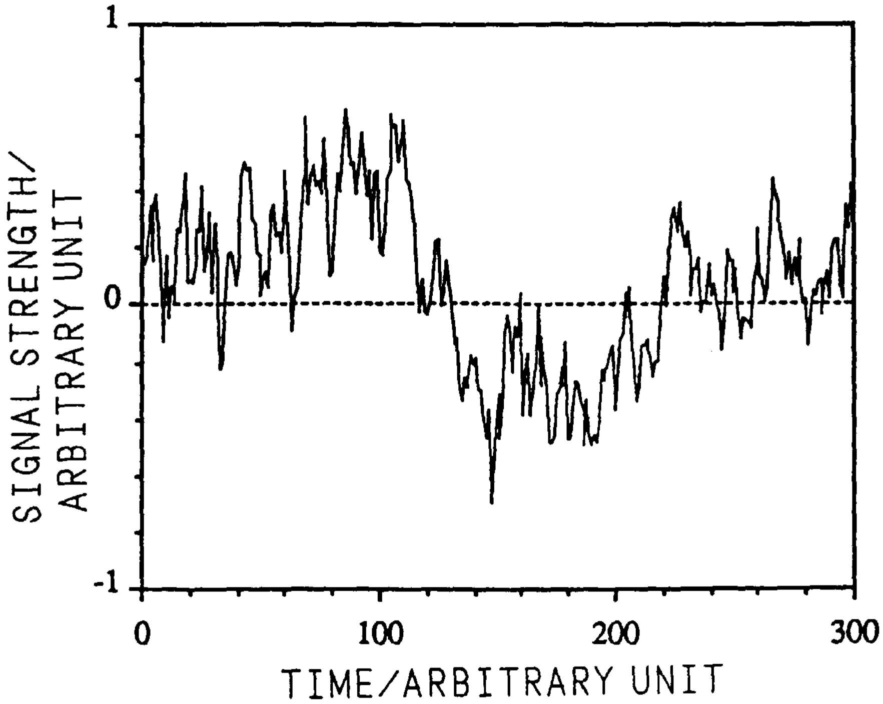
1
0
-1
SIGNAL STRENGTH/
ARBITRARY UNIT
0
100
200
300
TIME/ARBITRARY UNIT

FIG. 10

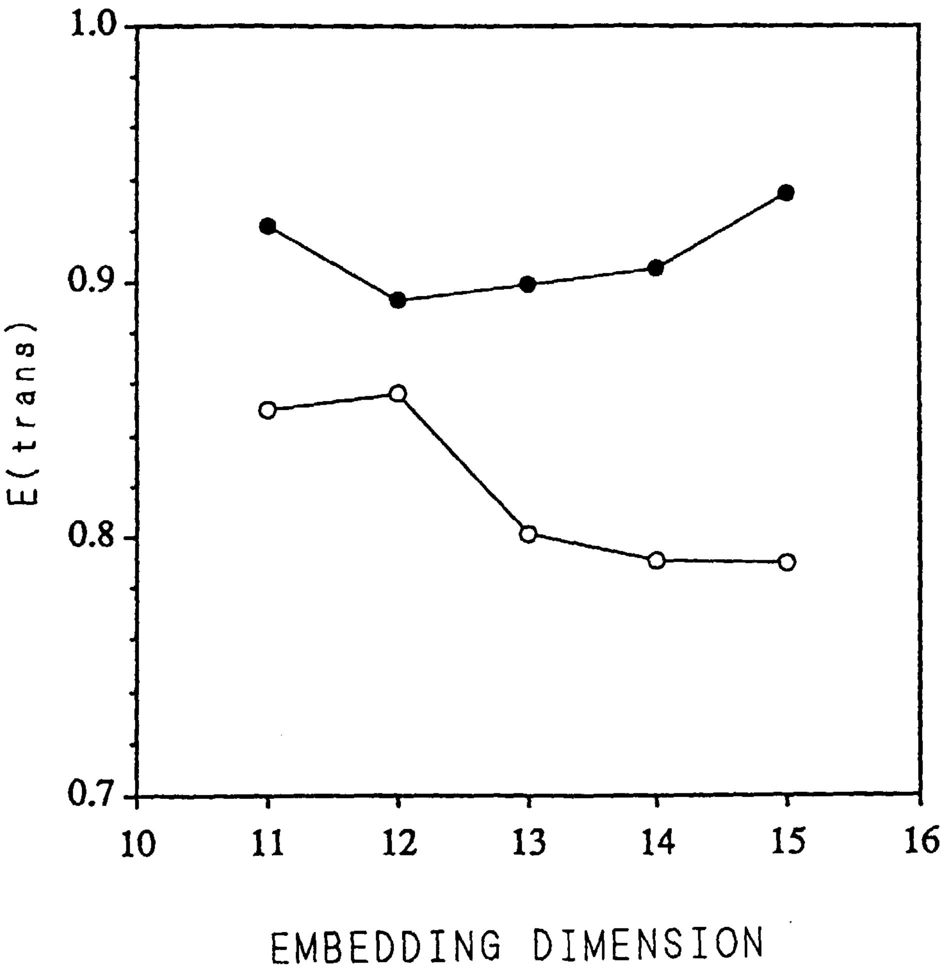

FIG. 11

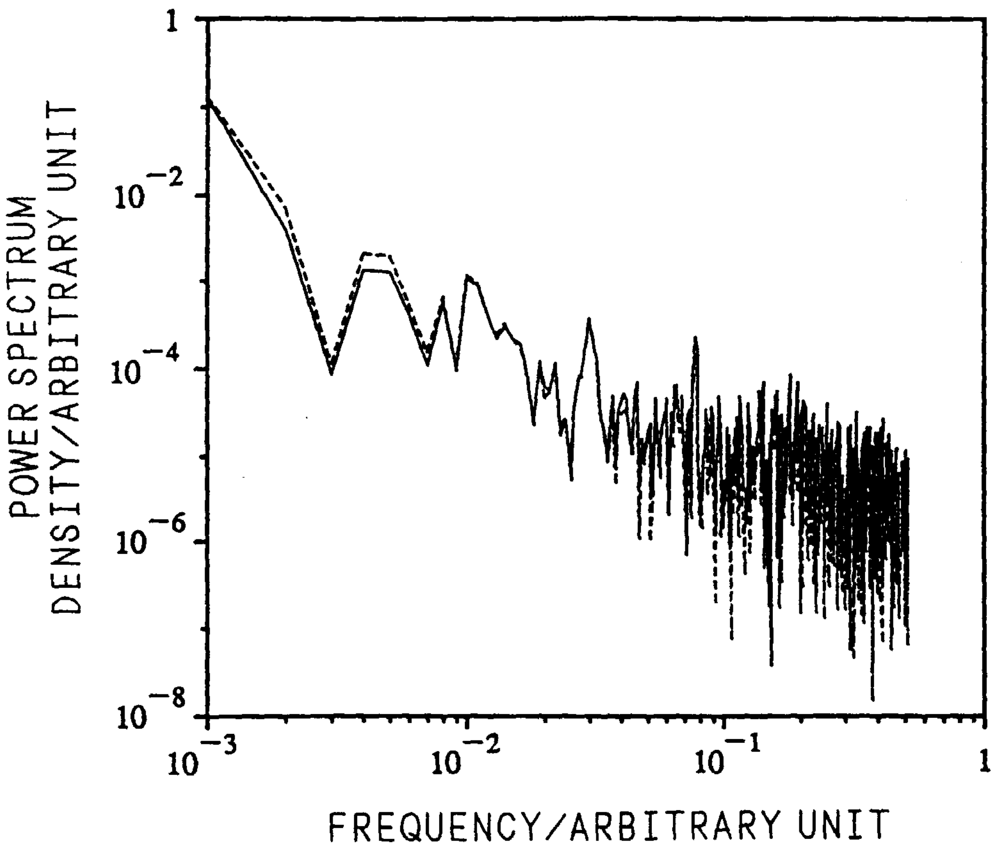
POWER SPECTRUM
DENSITY/ARBITRARY UNIT
1
$10^{-2}$
$10^{-4}$
$10^{-6}$
$10^{-8}$
$10^{-3}$
$10^{-2}$
$10^{-1}$
1
FREQUENCY/ARBITRARY UNIT

## INTERNATIONAL SEARCH REPORT

International application No. PCT/JP97/00367

**A. CLASSIFICATION OF SUBJECT MATTER**

Int. Cl[6] G01D1/18, G01M19/00, G08B23/00

According to International Patent Classification (IPC) or to both national classification and IPC

**B. FIELDS SEARCHED**

Minimum documentation searched (classification system followed by classification symbols)

Int. Cl[6] G01D1/18, G01M19/00, G08B23/00, G01D21/00

Documentation searched other than minimum documentation to the extent that such documents are included in the fields searched

Jitsuyo Shinan Koho 1926 - 1996
Kokai Jitsuyo Shinan Koho 1971 - 1995
Toroku Jitsuyo Shinan Koho 1994 - 1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 2-226024, A (Toshiba Corp.), September 7, 1990 (07. 09. 90) (Family: none) | 1 - 8 |

☐ Further documents are listed in the continuation of Box C. ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| March 24, 1997 (24. 03. 97) | April 1, 1997 (01. 04. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)